# EUROPEAN PATENT APPLICATION

(11) **EP 4 254 631 A1**
(43) Date of publication of application: **04.10.2023**
(21) Application number: 22888847.5
(22) Date of filing: 15.06.2022
(51) Int. Cl.: H01M 50/317, H01M 50/251

(54) **ENERGY STORAGE PREFABRICATED COMPARTMENT AND ENERGY STORAGE SYSTEM**

(30) Priority: 04.11.2021 CN 202122685670 U
(71) Applicant: Contemporary Amperex Technology Co., Limited, Ningde, Fujian 352100 (CN)
(72) Inventor: LIU, Yue, Ningde, Fujian 352100 (CN); WANG, Zengzhong, Ningde, Fujian 352100 (CN); ZHENG, Chenling, Ningde, Fujian 352100 (CN)
(74) Representative: Rowlands, Stuart Michael
(86) International application number: PCT/CN2022/098904
(87) International publication number: WO 2023/077811

(57) **Abstract**

The present application relates to an energy storage prefabricated compartment (100) and an energy storage system (200). The energy storage prefabricated compartment (100) comprises: a compartment body (10); a battery case (20), which comprises a case body (21) and a battery module (22); and a gas exhaust device (30), which has a gas intake end (31) and a gas exhaust end (32), wherein the gas intake end (31) is in communication with the interior of the case body (21), the gas exhaust end (32) is in communication with the exterior of the compartment body (10), and the gas exhaust device (30) is controlled to enable or disenable a connection between the gas intake end (31) and the gas exhaust end (32). By means of the provision of the gas exhaust device (30), when a large amount of high-temperature and high-pressure gas is generated in the battery case (20) due to the occurrence of thermal runaway of battery cells, the gas intake end (31) and the gas exhaust end (32) are controlled to enable the connection therebetween, so as to quickly discharge the gas to the exterior of the compartment body (10) rather than the interior of the bin body (10), such that the high-temperature and high-pressure gas is prevented from coming into contact with combustible gas inside the compartment body (10), thus no deflagration or explosion of the energy storage prefabricated compartment (100) is caused.

## Description

### Cross Reference

The present application relates to the Chinese patent application No. 202122685670.X, filed on November 04, 2021 and entitled "ENERGY STORAGE PREFABRICATED COMPARTMENT AND ENERGY STORAGE SYSTEM", which is incorporated herein by reference in its entirety.

### Technical Field

The present application relates to the technical field of electrochemical energy storage equipment, and in particular to an energy storage prefabricated compartment and an energy storage system.

### Background Art

An energy storage prefabricated compartment is a highly concentrated energy storage device formed by placing a plurality of battery boxes in a compartment body, has the advantages of short construction time, convenient movement, small footprint, etc., and has been continuously applied in various large-scale projects in recent years.

In general, when a battery cell in a battery module in the battery box undergoes thermal runaway, a large amount of high-temperature and high-pressure gas will be generated. In order to prevent the battery box from bursting, the gas needs to be discharged in a timely manner.

However, in some cases, an exhaust device can only discharge the gas into the compartment body, and the combustible gas in the compartment body may still cause deflagration or explosion of the energy storage prefabricated compartment.

### Summary of the Invention

In view of this, it is necessary to provide an energy storage prefabricated compartment and an energy storage system to prevent gas from being discharged into a compartment body without causing deflagration or explosion of the energy storage prefabricated compartment, in order to address the problem of an exhaust device of the energy storage prefabricated compartment in some cases only being capable of discharging the gas into the compartment body, which will still cause deflagration or explosion of the energy storage prefabricated compartment.

In a first aspect, the present application provides an energy storage prefabricated compartment, comprising:
a compartment body;
a battery box including a box body and a battery module; and
an exhaust device having an intake end and an exhaust end, wherein the intake end is in communication with the inside of the box body, the exhaust end is in communication with the outside of the compartment body, and the exhaust device is controlled to connect or disconnect the intake end to/from the exhaust end.

In the technical solution of the embodiment of the present application, with the provision of the exhaust device, it is possible, when a large amount of high-temperature and high-pressure gas is generated in the battery box due to thermal runaway of a battery cell, to control the connection between the intake end and the exhaust end, so as to quickly discharge the gas to the outside of the compartment body instead of to the inside of the compartment body, thereby preventing the contact between the high-temperature and high-pressure gas and a combustible gas in the compartment body, not causing deflagration or explosion of the energy storage prefabricated compartment.

In some embodiments, the exhaust device includes an explosion-proof valve assembly having the intake end and the exhaust end. It is possible to quickly respond to the pressure difference between the inside of the box body and the outside of the compartment body, and to perform the operation of connecting or disconnecting the intake end to/from the exhaust end.

In some embodiments, the exhaust device further includes a pipe body, and the explosion-proof valve assembly includes an inner explosion-proof valve and an outer explosion-proof valve arranged at two ends of the pipe body, wherein the inner explosion-proof valve has the intake end, and the outer explosion-proof valve has the exhaust end. The arrangement of two explosion-proof valves can improve the stability and reliability of the connection and disconnection between the intake end and the exhaust end.

In some embodiments, the inner explosion-proof valve and the outer explosion-proof valve are independent structures relative to each other. It is possible to improve the stability of the cooperation between the two.

In some embodiments, the exhaust device has a thermal insulation space enabling thermal insulation with gas enclosed in the thermal insulation space when the intake end is disconnected from the exhaust end. It is possible to avoid the temperature loss of the battery box at the exhaust device, that is, the loss of the explosion-proof area, which will affect the thermal insulation performance.

In some embodiments, the energy storage prefabricated compartment further includes a thermal insulation layer arranged between the box body and the compartment body. It is possible to improve the overall thermal insulation effect of the energy storage prefabricated compartment.

In some embodiments, the thermal insulation layer includes a stone wool thermal insulation layer. Stone wool has good fire and flame retardant safety, and is non-toxic, tasteless, non-radioactive, and harmless to the environment and human body; in addition, it is easy to construct.

In some embodiments, the energy storage prefabricated compartment further includes a first elastic sealing ring, the box body is provided with a first communication port for communicating the inside of the box body with the inside of the compartment body, and the first elastic sealing ring is arranged on an outer side of the box body and surrounds the first communication port; and
the exhaust device is connected to the box body and is in communication with the first communication port, and the first elastic sealing ring is compressed between the exhaust device and the box body. In this way, it is possible for the exhaust device to be docked with the first communication port from the outside of the box body without affecting the mounting of the battery module inside the box body, and the sealing method is simple and the sealing stability is high.

In some embodiments, the energy storage prefabricated compartment further includes a second elastic sealing ring, the compartment body is provided with a second communication port for communicating the inside of the compartment body with the outside of the compartment body, the exhaust device passes through the second communication port, and the second elastic sealing ring is compressed between the exhaust device and an inner wall of the second communication port. The sealing form is simple and the sealing is reliable; moreover, compared with the compression of the first elastic sealing ring mentioned above, there is no need to add an additional structure of the exhaust device on the outer side of the compartment body, so as to avoid being damaged by an external environment collision.

In a second aspect, the present application provides an energy storage system, including the energy storage prefabricated compartment described above.

In the technical solution of the embodiment of the present application, with the provision of the exhaust device, it is possible, when a large amount of high-temperature and high-pressure gas is generated in the battery box due to thermal runaway of a battery cell, to control the connection between the intake end and the exhaust end, so as to quickly discharge the gas to the outside of the compartment body instead of to the inside of the compartment body, thereby preventing the contact between the high-temperature and high-pressure gas and a combustible gas in the compartment body, not causing deflagration or explosion of the energy storage prefabricated compartment.

The above description is only a summary of the technical solutions of the present application. In order to be able to understand the technical means of the present application more clearly, the technical means can be implemented according to the content of the specification. Furthermore, to make the above and other objectives, features and advantages of the present application more comprehensible, specific implementations of the present application are exemplified below.

### Description of Drawings

In order to more clearly illustrate the technical solutions of the embodiments of the present application, the drawings to be used in the description of the embodiments of the present application will be described briefly below. It will be apparent that the drawings and the following description are merely some embodiments of the present application. For those skilled in the art, other drawings can also be obtained according to these drawings without any creative effort. In the drawings:
Fig.1 is a perspective structural schematic view of an energy storage prefabricated compartment according to an embodiment of the present application;
Fig. 2 is a cross-sectional structural schematic view of a partial structure of an energy storage prefabricated compartment according to an embodiment of the present application; and
Fig. 3 is a schematic structural view of a partial structure of an energy storage system according to an embodiment of the present application.

Energy storage prefabricated compartment 100, compartment body 10, battery box 20, box body 21, battery module 22, exhaust device 30, intake end 31, exhaust end 32, explosion-proof valve assembly 33, inner explosion-proof valve 331, outer explosion-proof valve 332, pipe body 34, thermal insulation space 35, thermal insulation layer 40, energy storage system 200, electrical compartment 210.

### Detailed Description

Embodiments of the technical solutions of the present application will be described in detail below with reference to the accompanying drawings. The following embodiments are only used to more clearly illustrate the technical solution of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific embodiments and are not intended to limit the present application; the terms "including" and "having" and any variations thereof in the specification and the claims of the present application and in the description of drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. In addition, the character "/" herein generally indicates an "or" relationship between the associated objects.

In the description of the embodiments of the present application, the term "plurality of" refers to at least two (including two). Similarly, "plurality of groups" refers to at least two (including two) groups, and "plurality of pieces" refers to at least two (including two) pieces.

In the description of the embodiments of the present application, the orientation or location relationships indicated by the technical terms "center", "longitudinal", "transverse", "length", "width", "thickness", "up", "down", "front", "back", "left", "right", "vertical", "horizontal", "top", "bottom", "inside", "outside", "clockwise", "counterclockwise", "axial", "radial", "circumferential" and the like are based on the orientation or location relationships shown in the drawings, and are only for convenience and simplification of the description of the embodiments of the present application, but do not indicate or imply that the devices or elements referred to must have particular orientations, be constructed and operated in particular orientations, and therefore cannot be construed as a limitation of the embodiments of the present application.

In the description of the embodiments of the present application, unless otherwise expressly specified and limited, the technical terms "mounting", "connected", "connecting", "fixing", and the like shall be understood in a broad sense, which, for example, may be a fixed connection, or a detachable connection or an integral connection; may also be a mechanical connection, or an electrical connection; may be a direct connection, or an indirect connection through an intermediate medium, and may be a communication within two elements or an interactive relationship between two elements. For those of ordinary skill in the art, the specific meanings of the above terms in the embodiments of the present application can be understood according to specific situations.

As mentioned in the section of Background Art, when a battery cell undergoes thermal runaway, a large amount of high-temperature and high-pressure gas will be generated. If the gas is not discharged in a timely manner, the battery box body will burst, and the outside air will enter a battery box to generate an open flame, so it is necessary to discharge the gas in a timely manner.

In the current battery boxes, an explosion-proof valve is arranged on one side of the box body of the battery box, such that the high-temperature gas generated by the battery cell inside the box body is directly discharged out of the box body through the explosion-proof valve.

However, the applicant has found that although the explosion-proof valve can reduce the bursting of the battery box to a certain extent, the gas discharged to the outside of the box body of the battery box will flow into a compartment body of the energy storage prefabricated compartment, and then meets a combustible gas in the compartment body, bringing about a new danger of deflagration or explosion of the energy storage prefabricated compartment.

Therefore, it is necessary to provide an energy storage prefabricated compartment and an energy storage system to prevent gas from being discharged into the energy storage prefabricated compartment without causing deflagration or explosion of the energy storage prefabricated compartment.

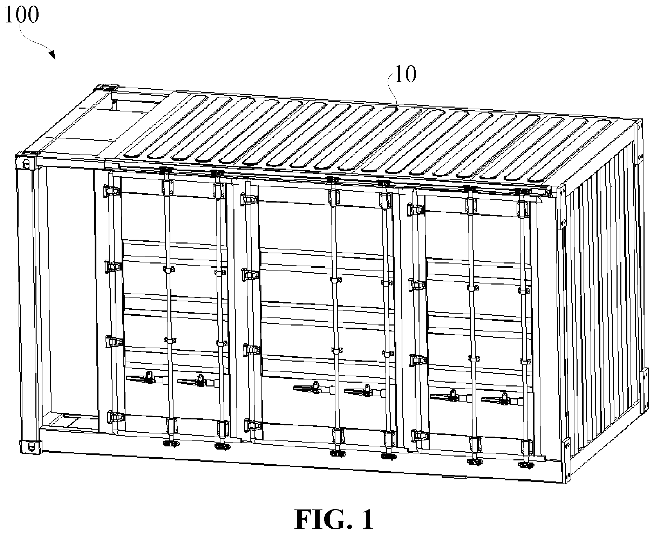

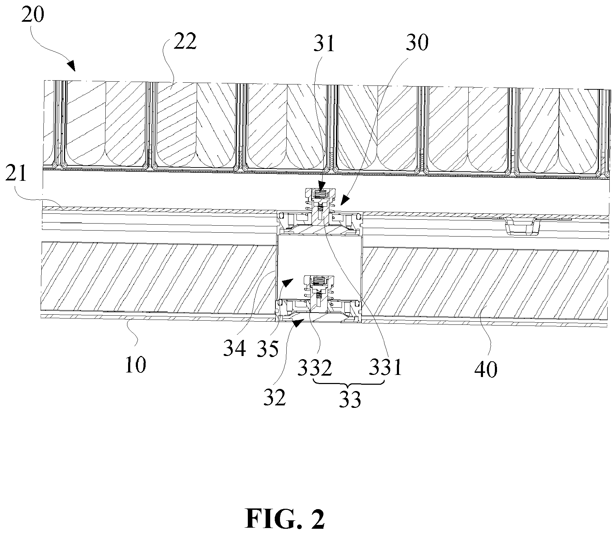

Fig.1 shows a perspective structural schematic view of an energy storage prefabricated compartment according to an embodiment of the present application, and Fig. 2 is a cross-sectional structural schematic view of a partial structure of an energy storage prefabricated compartment according to an embodiment of the present application. For ease of description, the drawings only show the structures related to the embodiments of the present application.

Referring to the above drawings, an embodiment of the present application provides a compartment body 100, including a compartment body 10, a battery box 20 and an exhaust device 30. The compartment body 100 of the present application is applied to an energy storage system 200. It can be understood that the energy storage system 200 may further include other compartments, such as an electrical compartment 210 and a fire compartment, which are well known to those skilled in the art and will not be described in detail here.

Specifically, the compartment body 100 may be a liquid-cooled energy storage prefabricated compartment, or an energy storage prefabricated compartment with other cooling means, which will not be limited here.

The battery box 20 includes a box body 21 and a battery module 22 arranged inside the box body 21. It can be understood that the battery module 22 is formed by combining a plurality of battery cells which are arranged in series or in parallel. It should be noted that the compartment body 100 may include a plurality of battery boxes 20, and the plurality of battery boxes 20 may be arranged in sequence in a width direction of the compartment body 10. Certainly, one battery box 20 may include a plurality of battery modules 22, and the plurality of battery modules 22 may be arranged in a height direction of the battery box 20.

The exhaust device 30 has an intake end 31 and an exhaust end 32. The intake end 31 is in communication with the inside of the box body 21, the exhaust end 32 is in communication with the outside of the compartment body 10, and the exhaust device 30 is controlled to connect or disconnect the intake end 31 to/from the exhaust end 32. It should be noted that, in order to ensure the sealing performance between the exhaust device 30 and the box body 21 and the compartment body 10 to prevent the gas from flowing from the box body 21 into the compartment body 10, or the outside gas from flowing into the box body 21, a sealing structure should be provided between the box body 21 and the intake end 31 and between the compartment body 10 and the outlet end 22.

In an embodiment of the present application, when there are a plurality of battery boxes 20, a plurality of exhaust devices 30 may also be included, and the plurality of exhaust devices 30 are arranged in one-to-one correspondence with the plurality of battery boxes 20. The one-to-one correspondence enables the exhaust device 30 to quickly respond to the state of the internal pressure of the corresponding battery box 20, improving the exhaust reliability. In some other embodiments, it is also possible that at least two battery boxes 20 share the same exhaust device 30, the box bodies 21 of the at least two battery boxes 20 are in communication with each other, and the exhaust device 30 is arranged on the box body 21 of one of the battery boxes 20. In this way, the exhaust effect can also be achieved.

In this way, with the provision of the exhaust device 30, it is possible, when a large amount of high-temperature and high-pressure gas is generated in the battery box 20 due to thermal runaway of a battery cell, to control the connection between the intake end 31 and the exhaust end 32, so as to quickly discharge the gas to the outside of the compartment body 10 instead of to the inside of the compartment body 10, thereby preventing the contact between the high-temperature and high-pressure gas and a combustible gas in the compartment body 10, not causing deflagration or explosion of the energy storage prefabricated compartment 100.

Still referring to Fig. 2, specifically, in an embodiment of the present application, the exhaust device 30 includes an explosion-proof valve assembly 33. The explosion-proof valve assembly 33 has the intake end 31 and the exhaust end 32. With the provision of the explosion-proof valve assembly 22, it is possible to quickly respond to the pressure difference between the inside of the box body 21 and the outside of the compartment body 10, and to perform the operation of connecting or disconnecting the intake end 31 to/from the exhaust end 32.

Specifically, in some embodiments, when the internal gas pressure of the box body 21 is greater than the external gas pressure of the compartment body 10, the intake end 31 is connected to the exhaust end 32, and the gas can be guided from the inside of the box body 21 to the compartment body 10 to discharge same. When the internal gas pressure of the box body 21 is less than or equal to the external pressure of the compartment body 10, the intake end 31 is disconnected from the exhaust end 32, so that the other outside the compartment body 10 cannot enter the inside of the box body 21. Of course, in other embodiments, it is also possible that the explosion-proof valve assembly 22 has a preset pressure difference. When the preset pressure difference is reached, the intake end 31 is connected to the exhaust end 32, and when the preset pressure difference is not reached, the intake end 31 is disconnected from the exhaust end 32. The preset pressure difference is a non-zero value.

Further, the exhaust device 30 includes further includes a pipe body 34, and the explosion-proof valve assembly 33 includes an inner explosion-proof valve 331 and an outer explosion-proof valve 332 arranged at two ends of the pipe body 34. The inner explosion-proof valve 331 has the intake end 31, and the outer explosion-proof valve 332 has the exhaust end 32. The arrangement of two explosion-proof valves can improve the stability and reliability of the connection and disconnection between the intake end 31 and the exhaust end 32. Specifically, the two ends of the pipe body 34 have a first mounting opening and a second mounting opening, the inner explosion-proof valve 331 is sealed and mounted at the first mounting opening, and the outer explosion-proof valve 332 is sealed and mounted at the second mounting opening. In some embodiments, the first mounting opening and the second mounting opening are oppositely arranged in the mounting direction of the battery box 20 relative to the compartment body 10. In this way, the length of the pipe body 34 can be shortened and the space occupied thereby can be reduced. It should be noted that the explosion-proof valve has a variety of specific structural forms, which is a technology well known to those skilled in the art, and will not be described in detail here.

In an embodiment of the present application, the inner explosion-proof valve 331 and the outer explosion-proof valve 332 are two separate explosion-proof valves, rather than an integrally-provided explosion-proof valve. That is, the inner explosion-proof valve 331 and the outer explosion-proof valve 332 are independent structures relative to each other. In this way, it is possible to improve the stability of the cooperation between the two. Of course, the inner explosion-proof valve 331 and the outer explosion-proof valve 332 may also be of an integrated structure, which will not be limited here.

Specifically, in practical applications, when a battery cell undergoes thermal runaway, the gas generated by the battery cell increases the internal gas pressure of the box body 21, and the inner explosion-proof valve 331 is opened when reaching an opening pressure due to the pressure difference on two sides, such that the gas inside the box body 21 flows into the pipe body 34, and then to the outer explosion-proof valve 332. The outer explosion-proof valve 332 is opened when reaching an opening pressure due to the pressure difference on two sides, such that the gas flows to the outside of the compartment body 10. Therefore, the gas flow path in the box body 21 passes through the inner explosion-proof valve 331, the pipe body 34, and the outer explosion-proof valve 332 in sequence, and finally reaches the outside of the compartment body 10.

In some embodiments, the exhaust device 30 has a thermal insulation space 35. The thermal insulation space 35 enables thermal insulation with gas sealed in the thermal insulation space 35 when the intake end 31 is disconnected from the exhaust end 32. In this way, it is possible to avoid the temperature loss of the battery box 20 at the exhaust device 30, that is, the loss of the explosion-proof area, which will affect the thermal insulation performance.

Specifically, the pipe body 34, the inner explosion-proof valve 331 and the outer explosion-proof valve 332 enclose the thermal insulation space 35. It should be noted that in the embodiment of the present application, the thermal insulation space 23 is used as a space for communicating the exhaust end 21 with the intake end 22, and cannot be filled with other thermal insulation materials, otherwise the communication relationship between the exhaust end 21 and the intake end 22 will be affected, affecting the normal exhaust function of the exhaust device 30.

In some embodiments, the compartment body 100 further includes a thermal insulation layer 40. The thermal insulation layer 40 is arranged between the box body 21 and the compartment body 10. The provision of the thermal insulation layer 40 can also strengthen the thermal insulation effect on the battery box 20. Specifically, the thermal insulation layer 40 is provided with an avoidance hole for avoiding the exhaust device 30. That is, the thermal insulation layer 40 is not arranged in the explosion-proof area where the explosion-proof valve assembly 33 is located, so that the thermal insulation effect at the non-explosion-proof area can be improved. In some embodiments, the thermal insulation layer 40 is arranged over an inner wall of the compartment body 10. More specifically, the thermal insulation layer 40 may cover the inner wall of the entire compartment body 10 on one side, or on all inner walls of the compartment body 10, so as to achieve a good thermal insulation effect.

In some embodiments, the thermal insulation layer 40 includes a stone wool thermal insulation layer. In other embodiments, it may also be a glass wool thermal insulation layer or a ceramic thermal insulation layer, which will not be limited here. Stone wool has good fire and flame retardant safety, and is non-toxic, tasteless, non-radioactive, and harmless to the environment and human body; in addition, it is easy to construct.

In some embodiments, the compartment body 100 further includes a first elastic sealing ring for sealing the box body 21 from the exhaust device 30. Specifically, the box body 21 is provided with a first communication port for communicating the inside of the box body 21 with the inside of the compartment body 10, the first elastic sealing ring is arranged on an outer side of the box body 21 and surrounds the first communication port, the exhaust device 30 is connected to the box body 21 and is in communication with the first communication port, and the first elastic sealing ring is compressed between the exhaust device 30 and the box body 21. In this way, it is possible for the exhaust device 30 to be docked with the first communication port from the outside of the box body 21 without affecting the mounting of the battery module 22 inside the box body 21, and the sealing method is simple and the sealing stability is high. In an embodiment of the present application, the first elastic sealing ring is compressed between the inner explosion-proof valve 331 and the box body 21. Specifically, the inner explosion-proof valve 331 may be connected to an outer wall of the box body 21 via a screw, so as to compress the first elastic sealing ring. More specifically, there are a plurality of screws, which are arranged at intervals around the inner explosion-proof valve 331 to achieve a reliable connection.

In some embodiments, the compartment body 100 further includes a second elastic sealing ring, the compartment body 10 is provided with a second communication port for communicating the inside of the compartment body 10 with the outside of the compartment body 10, the exhaust device 30 passes through the second communication port, and the second elastic sealing ring is compressed between the exhaust device 30 and an inner wall of the second communication port. In an embodiment of the present application, the second elastic sealing ring is compressed between the outer explosion-proof valve 332 and the inner wall of the second communication port. Specifically, the box body 21 is provided with a skin, the second communication port penetrates the skin, and the second elastic sealing ring is compressed between the outer explosion-proof valve 332 and the inner wall of the second communication port corresponding to the skin. By means of compressing the second elastic sealing ring between the exhaust device 30 and the inner wall of the second communication port, the sealing form is simple and the sealing is reliable; moreover, compared with the compression of the first elastic sealing ring mentioned above, there is no need to add an additional structure of the exhaust device 30 on the outer side of the compartment body 10, so as to avoid being damaged by an external environment collision.

Specifically, during the mounting of the exhaust device 30, the intake end 31 of the exhaust device 30 passes from the outside of the compartment body 10 through the second communication port of the compartment body 10 to the inside of the compartment body 10, and is then docked with the first communication port, and the exhaust end 32 can be mounted at the second communication port. In addition, during the mounting, the first elastic sealing ring and the second elastic sealing ring can be compressed to achieve sealing.

In order to prevent the mounting of the battery box 20 inside the compartment body 10 from interfering with the position of the exhaust device 30, the exhaust device 30 is configured to be located on the opposite side of the battery box 20 to the compartment body 10 in the mounting direction of the battery box relative to the compartment body 10. That is, the exhaust device 30 is arranged at the bottom of the battery box 20 in the mounting direction. In other embodiments, the exhaust device 30 may also be mounted at other portions of the battery box 20, such as a side portion, which will not be limited here.

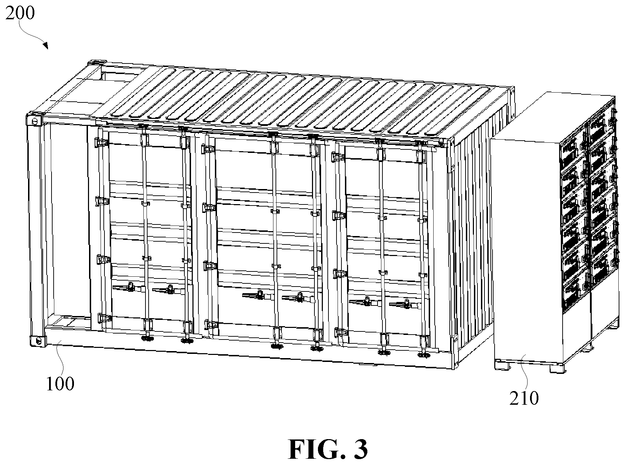

Fig. 3 shows a schematic structural view of a partial structure of an energy storage system according to an embodiment of the present application.

Referring to Fig. 3, based on the same inventive concept, the present application also provides an energy storage system 200, including the compartment body 100 described above.

Specifically, the energy storage system 200 further includes other compartments, such as an electrical compartment 210 and a fire compartment.

The compartment body 100 and the energy storage system 200 provided in the embodiments of the present application have the following beneficial effects.

With the provision of the exhaust device 30, it is possible, when a large amount of high-temperature and high-pressure gas is generated in the battery box 20 due to thermal runaway of a battery cell, to control the connection between the intake end 31 and the exhaust end 32, so as to quickly discharge the gas to the outside of the compartment body 10 instead of to the inside of the compartment body 10, thereby preventing the contact between the high-temperature and high-pressure gas and a combustible gas in the compartment body 10, not causing deflagration or explosion of the energy storage prefabricated compartment 100.

Finally, it should be noted that the above embodiments are merely used for illustrating rather than limiting the technical solutions of the present application. Although the present application has been described in detail with reference to the above various embodiments, those of ordinary skill in the art should understand that the technical solutions specified in the above various embodiments can still be modified, or some or all of the technical features therein can be equivalently substituted; and such modifications or substitutions do not make the essence of the corresponding technical solutions depart from the scope of the technical solutions of the various embodiments of the present application, which shall fall within the scope of the claims and the specification of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. An energy storage prefabricated compartment (100), comprising:
a compartment body (10);
a battery box (20) comprising a box body (21) and a battery module (22); and
an exhaust device (30) having an intake end (31) and an exhaust end (32), wherein the intake end (31) is in communication with the inside of the box body (21), the exhaust end (32) is in communication with the outside of the compartment body (10), and the exhaust device (30) is controlled to connect or disconnect the intake end (31) to/from the exhaust end (32).

2. The energy storage prefabricated compartment (100) according to claim 1, wherein the exhaust device (30) comprises an explosion-proof valve assembly (33), the explosion-proof valve assembly (33) having the intake end (31) and the exhaust end (32).

3. The energy storage prefabricated compartment (100) according to claim 2, wherein the exhaust device (30) further comprises a pipe body (34), and the explosion-proof valve assembly (33) comprises an inner explosion-proof valve (331) and an outer explosion-proof valve (332) arranged at two ends of the pipe body (34), wherein the inner explosion-proof valve (331) has the intake end (31), and the outer explosion-proof valve (332) has the exhaust end (32).

4. The energy storage prefabricated compartment (100) according to claim 3, wherein the inner explosion-proof valve (331) and the outer explosion-proof valve (332) are independent structures relative to each other.

5. The energy storage prefabricated compartment (100) according to any one of claims 1-4, wherein the exhaust device (30) has a thermal insulation space (35), the thermal insulation space (35) enabling thermal insulation with gas enclosed in the thermal insulation space (35) when the intake end (31) is disconnected from the exhaust end (32).

6. The energy storage prefabricated compartment (100) according to any one of claims 1-5, wherein the energy storage prefabricated compartment (100) further comprises a thermal insulation layer (40), the thermal insulation layer (40) being arranged between the box body (21) and the compartment body (10).

7. The energy storage prefabricated compartment (100) according to claim 5, wherein the thermal insulation layer (40) comprises a stone wool thermal insulation layer (40).

8. The energy storage prefabricated compartment (100) according to any one of claims 1-5, wherein the energy storage prefabricated compartment (100) further comprises a first elastic sealing ring, the box body (21) is provided with a first communication port for communicating the inside of the box body (21) with the inside of the compartment body (10), and the first elastic sealing ring is arranged on an outer side of the box body (21) and surrounds the first communication port; and
the exhaust device (30) is connected to the box body (21) and is in communication with the first communication port, and the first elastic sealing ring is compressed between the exhaust device (30) and the box body (21).

9. The energy storage prefabricated compartment (100) according to any one of claims 1-5, wherein the energy storage prefabricated compartment (100) further comprises a second elastic sealing ring, the compartment body (10) is provided with a second communication port for communicating the inside of the compartment body (10) with the outside of the compartment body (10), the exhaust device (30) passes through the second communication port, and the second elastic sealing ring is compressed between the exhaust device (30) and an inner wall of the second communication port.

10. An energy storage system (200), comprising the energy storage prefabricated compartment (100) of any one of claims 1-9.
